(19)

Europäisches Patentamt

European Patent Office

Office européen des brevets

(11) **EP 3 954 983 B1**

(12) **EUROPEAN PATENT SPECIFICATION**

(45) Date of publication and mention
of the grant of the patent:
**06.05.2026 Bulletin 2026/19**

(21) Application number: **20382749.8**

(22) Date of filing: **12.08.2020**

(51) International Patent Classification (IPC):
*G01N 21/41* (2006.01)    *G01N 21/45* (2006.01)

(52) Cooperative Patent Classification (CPC):
**G01N 21/45; G01N 21/4133;** G01N 2021/458

(54) **A METHOD OF MANUFACTURING AN INTERFEROMETRIC FIBER OPTIC REFRACTOMETER**

EIN VERFAHREN ZUR HERSTELLUNG EINES INTERFEROMETRISCHEN FASEROPTISCHEN REFRAKTOMETERS

PROCÉDÉ DE FABRICATION D'UN RÉFRACTOMÈTRE À FIBRE OPTIQUE INTERFÉROMÉTRIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**16.02.2022 Bulletin 2022/07**

(73) Proprietor: **Universidad del País Vasco - Euskal Herriko Unibertsitatea**
**48160 Leioa (Bizkaia) (ES)**

(72) Inventors:
• **Villatoro Bernardo, Agustín Joel**
**48940 LEIOA (ES)**
• **Flores Bravo, José Ángel**
**48940 LEIOA (ES)**
• **Zubia Zaballa, Joseba Andoni**
**48940 LEIOA (ES)**

(74) Representative: **Balder IP Law, S.L.**
**Paseo de la Castellana 93**
**5ª planta**
**28046 Madrid (ES)**

(56) References cited:
**GB-A- 2 570 332    US-A1- 2003 112 443**

• **ARRIZABALAGA OSKAR ET AL: "Microrefractometer Based on Off-Center Polymer Caps Bonded Onto Optical Fiber Tips", JOURNAL OF LIGHTWAVE TECHNOLOGY, IEEE, USA, vol. 36, no. 17, 1 September 2018 (2018-09-01), pages 3573 - 3579, XP011686879, ISSN: 0733-8724, [retrieved on 20180711], DOI: 10.1109/JLT.2018.2842121**
• **TAN X L ET AL: "UV-Curable Polymer Microhemisphere-Based Fiber-Optic Fabry-Perot Interferometer for Simultaneous Measurement of Refractive Index and Tempera", IEEE PHOTONICS JOURNAL, IEEE, USA, vol. 6, no. 4, 1 August 2014 (2014-08-01), pages 1 - 8, XP011553057, [retrieved on 20140709], DOI: 10.1109/JPHOT.2014.2332460**
• **CHENG-LING LEE ET AL: "A Hot-Polymer Fiber Fabry-Perot Interferometer Anemometer for Sensing Airflow", SENSORS, vol. 17, no. 9, 2 September 2017 (2017-09-02), pages 2015, XP055733158, DOI: 10.3390/s17092015**
• **IV�N HERN�NDEZ-ROMANO ET AL: "Optical fiber temperature sensor based on a microcavity with polymer overlay", OPTICS EXPRESS, vol. 24, no. 5, 7 March 2016 (2016-03-07), US, pages 5654, XP055758424, ISSN: 2161-2072, DOI: 10.1364/OE.24.005654**
• **YVES ST-AMANT ET AL: "Intrinsic properties of the optical coupling between axisymmetric Gaussian beams", APPLIED OPTICS, vol. 43, no. 30, 20 October 2004 (2004-10-20), US, pages 5691, XP055759242, ISSN: 0003-6935, DOI: 10.1364/AO.43.005691**

EP 3 954 983 B1

- ZHANG GUILIN ET AL: "Large temperature sensitivity of fiber-optic extrinsic Fabry-Perot interferometer based on polymer-filled glass capil", OPTICAL FIBER TECHNOLOGY, vol. 19, no. 6, 19 October 2013 (2013-10-19), pages 618 - 622, XP028773766, ISSN: 1068-5200, DOI: 10.1016/J.YOFTE.2013.09.010

- YAO MIAN ET AL: "Optical Fiber-Tip Sensors Based on In-Situ -Printed Polymer Suspended-Microbeams", SENSORS, vol. 18, no. 6, 5 June 2018 (2018-06-05), pages 1825, XP055779361, DOI: 10.3390/s18061825

## Description

### TECHNICAL FIELD

The present invention refers to a method for manufacturing an interferometric optical fiber refractometer that has an increased measuring range and that is temperature independent.

### STATE OF THE ART

Refractometers are devices that measure the refractive index of a sample. Said refractometers have been important in many industrial and scientific applications during centuries. Commercial refractometers measure the refractive index of a liquid deposited on a prism of known refractive index. Such refractometers generally operate at visible wavelengths (589 nm), but they can be modified to operate at infrared wavelengths. The measuring range of prism-based refractometers is limited to indices which are smaller than that of the prism, which is typically around 1.7. Commercial refractometers are precise because they use several opto-mechanical components and have a system to keep the sample at constant temperature during the measurements.

Miniaturization of prism-based refractometers is complex and thus, they are not appropriate for refractometry in small spaces such as in microfluidic channels or in flowers in vivo. For these applications, refractometers based on optical fibers are good candidates. The challenge in this case is to achieve refractometers that have, not only miniaturized dimensions, but also broad measuring ranges, resolutions comparable or even higher to those of commercial refractometers and, ideally, temperature independence. In addition, the fabrication of the refractometer must be highly reproducible and the cost of the device must be low. To achieve all these features, the optical fiber sensing community has proposed a myriad of alternatives.

Up to date, three different techniques have been proposed to measure the refractive index of a sample with optical fibers. In one of these techniques, the sample under test alters the guided light through direct interaction with evanescent waves or by means of thin layers. Alternatively, instead of evanescent waves or thin layers, tilted Bragg gratings have been also used. Refractometers based on evanescent wave interactions or on tilted Bragg gratings require an interaction length of several millimeters and can measure indices in a narrow range, typically between 1.3 and 1.45. Moreover, they are highly sensitive to temperature. Another technique exploits the Fresnel reflection of an optical fiber-sample interface, which depends on the refractive index of the fiber core and that of the sample. This technique requires a sophisticated interrogation system to compensate fluctuations of the light source or bending losses in the optical fiber. However, its main drawback is the fact that two values of refractive index can give the same result. In refractive index sensing, this issue is called ambiguity.

Fabry-Perot Interferometry (FPI) is another powerful technique to measure refractive index of a sample. In this technique, a microscopic cavity is fabricated on the facet of an optical fiber. The sample under test can be placed inside the cavity or outside of the same. In either case, the interference pattern of the interferometer changes in proportion of the refractive index of the sample. Such changes can be quantified in different manners. The main drawbacks of most FPI-based refractometers reported until now include complex fabrication, hence, low reproducibility, limited measuring range, ambiguity issues, and temperature sensitivity.

There is still a need in the state of the art for a manufacturing process that is easily reproducible, has low complexity and a low associated cost.

US2003112443A1 discloses a method of manufacturing an interferometric fibre optic refractometer by inserting an optical fiber in a capillary tube and by filling a hydrogel into an end portion of the capillary tube and bringing it to gelation.

### DESCRIPTION OF THE INVENTION

The solution herein disclosed refers to the manufacturing process of an interferometric optical fiber refractometer.

The manufacturing process is easily reproducible and presents low complexity and cost.

A first example outside the subject-matter of the claims is an interferometric fiber optic refractometer. The interferometric fiber optic refractometer comprises a ferrule having a longitudinal through hole and a Single Mode Fiber (SMF) having a flat end facet that is substantially perpendicular to the longitudinal axis of the SMF. The SMF is inserted within the longitudinal through hole of the ferrule with the flat end facet of the SMF being located at a distance "d" from the end (tip) of the ferrule. The distance "d" defines a cavity within the ferrule. The interferometric fiber optic refractometer further comprises a substance or material filing the cavity that forms a flat end with the tip of the ferrule (the flat outer surface of the substance or material is substantially aligned with the end surface of the ferrule forming a flat end tip of the ferrule). This flat end tip of the ferrule, and more particularly, the flat outer surface of the material or substance, is substantially parallel to the flat end facet of the SMF. The refractive index of the substance or material is different from the refractive index of the core of the SMF.

The interferometric fiber optic refractometer is configured to measure the refractive index of a sample that is in direct contact with the flat end tip of the ferrule from an interference pattern of the interferometric fiber optic refractometer. This sample may be deposited onto the flat end tip of the ferrule or the ferrule may be inserted into the sample at least partially covering the flat end tip. In any case, the sample under test will be in direct contact with the flat end tip of the ferrule and more particularly, with the flat outer surface of the substance or material that fills the cavity and that is substantially aligned with the end surface of the tip of the ferrule. The interferometric fiber optic refractometer is able to measure refractive indices of the samples in a very broad range, from 1 to 2 approximately.

The cavity of the refractometer has been filled with the substance by surface tension (sucked) as the single mode fiber moves inwards the distance 'd' from a point in which the flat end facet of the single mode fiber is coincident with the end of the ferrule and the substance is located onto the end of the ferrule.

While the flat end facet of the SMF may be obtained by cleaving and/or polishing the SMF, the flat end tip of the ferrule may be obtained by subjecting the tip of the ferrule, and more particularly the outer surface of the substance filing the cavity, to polishing operations.

Thus, the interferometric fiber optic refractometer comprises a conventional SMF inserted in a standard ferrule. As used herein, the SMF may be any optical fiber designed to carry one single mode of light. As used herein, the ferrule may be any kind of ferrule such as stainless steel or ceramic (e.g., zirconia) ferrule with different lengths and outer diameters. The cavity, whose dimensions can be controlled (the cavity has preferably a cylindrical shape with a diameter corresponding to the diameter of the through hole and a length corresponding to the distance "d") is created between the flat end facet of the SMF and the end of the ferrule (tip of the ferrule) by the controlled movement of the SMF relative to the ferrule. The cavity is completely filled with a substance or material of known refractive index. The refractive index of the substance or material in the cavity may be greater or less than the refractive index of the core of the SMF.

The cavity may be cylindrical or rectangular shaped. More preferably, the cavity is cylindrical shaped.

The distance "d" of the cavity is within a range between 40 and 180 $\mu$m, more preferably, within a range between 40 and 80 $\mu$m (short cavity) or within a range between 125 and 150 $\mu$m (long cavity). This distance "d" may be less than 40 $\mu$m or greater than 180 $\mu$m depending on the particular design requirements of the interferometric fiber optic refractometer.

The substance or material may be a curable polymer, resin, acrylate, or a glass provided that the refractive index of such substance or material is different than that of the core of the SMF. These glasses may be, preferably, glasses with low melting temperatures (e.g., melting temperatures lower than 500 °C) such as borosilicate. Examples of curable polymers may be SU-8 (epoxy-based negative photoresist), among other polymers. Particularly, the curable polymers may be UV-curable polymers such as NOA81 or NOA68 from Norland Optical Adhesives®, among others. Alternatively, the curable polymers may be temperature curable polymers such as polydimethylsiloxane (PDMS), among others. More particularly, the UV-curable polymers may be selected from a group comprising: NOA81, NOA68, SU8, and any combination thereof, among others.

The diameter of the longitudinal through hole of the ferrule and the diameter of the SMF is substantially the same so the SMF fits within the longitudinal through hole of the ferrule.

The interferometric optical fiber refractometer is able to measure refractive indices from 1 to 2 that is a measuring range substantially broader than other know refractometers. In addition, interferometric optical fiber refractometer is not affected by fluctuations of temperature and can achieve a resolution of $2.3 \times 10^{-5}$, which is similar to that of known commercial refractometers.

The invention is directed to a method for manufacturing an interferometric fiber optic refractometer. The method comprises introducing a SMF with a flat end facet into a longitudinal through hole of a ferrule until the flat end facet reaches the end of the ferrule. The flat end facet of the SMF is substantially perpendicular to the longitudinal axis of the SMF and thus, to the longitudinal axis of the ferrule. Then, the method comprises depositing a substance or material onto the end of the ferrule. The substance or material has a refractive index that is different from the refractive index of the core of the SMF. The SMF is moved then towards the inside of the ferrule a distance "d", such that the substance fills, by surface tension, the cavity created inside the ferrule. Due to surface tension, the fiber sucks out the substance or material as it moves and thus, a cavity of length "d" filled with the substance is formed at the end of the ferrule. This way of introducing the substance or material into the cavity ensures a complete and homogeneous filing of the cavity, presents low complexity and is easily reproducible. This distance "d" defines the cavity created inside the ferrule. In particular, the diameter of the cavity corresponds to the diameter of the through hole of the ferrule while the controllable distance "d" corresponds to the length of the cavity. Therefore, the volume of the cavity will depend on the controllable distance "d". The substance or material is, preferably, in fluid state to facilitate its introduction into the cavity.

After that, the substance or material is at least partially solidified and polished (the substance or material protruding from the opening of the longitudinal through hole located at the tip of the ferrule) to form a flat end tip of the ferrule that is substantially parallel to the flat end facet of the SMF. Therefore, after being polished, the flat outer surface of the substance or material will be substantially aligned with the end surface of the ferule forming the flat end tip of the ferrule. The degree of solidification the substance or material is subjected to is high enough to allow the polishing operation.

In some embodiments, the method comprises maintaining the SMF and the ferrule in a vertical position during the depositing and moving steps. In this way, the substance is deposited and maintained on the horizontal surface of the tip of the ferrule such that the gravity force contributes to the introduction of the substance or material into the cavity. Then, the deposition of the substance on the tip of the ferrule and its introduction into the cavity are facilitated.

In some embodiments, the movement of the SMF relative to the ferrule is performed by a motorized translation stage. As used herein, the motorized translation stage may refer to high precision positioning devices used in industrial and scientific automated motion applications. These motorized translation stages may comprise linear motors, brushless DC motors, DC motors, stepper motors, and piezoelectric motors, among others. Preferably, the motorized translation stage may comprise a stepper motor which provides higher precision in the translation movement of the SMF relative to the ferrule. In this manner, the distance "d", i.e., the cavity size of the interferometric fiber optic refractometer, can be controlled with nanometer precision.

In some embodiments, the substance is a curable polymer and solidifying the substance comprises curing the curable polymer. The substance, that it is a curable polymer in fluid state, is then cured until it is partially or totally solidified.

In some embodiments, the curable polymer is a UV-curable polymer and curing the curable polymer comprises curing the UV-curable polymer with a UV-light source. Alternatively, the curing operation may be performed by applying temperature variations to a temperature curable polymer.

In some embodiments, the distance "d" is within a range between 40 and 180 $\mu$m, more preferably within a range between 40 and 80 $\mu$m or within a range between 125 and 150 $\mu$m.

In some embodiments, a diameter of the longitudinal through hole of the ferrule and a diameter of the single mode fiber is substantially the same.

A second example outside the subject-matter of the claims is a method for measuring a refractive index of a sample. The method comprises providing an interferometric fiber optic refractometer as previously described. A sample from which the refractive index is to be measured is placed in direct contact with the tip of the ferrule. This sample may be deposited onto the tip of the ferrule, or the tip of the ferrule may be inserted into the sample.

The method further comprises injecting a probe optical signal through the single mode fiber and capturing an interference pattern of the interferometric fiber optic refractometer. The interference pattern results from the superposition of a first reflected optical signal and a second reflected optical signal generated in the interferometric fiber optic refractometer in response to the injection of the probe optical signal. The superposition of the two reflected optical signals at the same wavelength results in a combined optical signal at the same wavelength and whose amplitude and phase is the sum of the amplitudes and phases, respectively, of the reflected optical signals. The first reflected optical signal corresponds to the reflection of the probe optical signal into the SMF-substance interface. In other words, the first reflected optical signal is the signal generated due to the reflection of the probe optical signal in the flat end facet of the SMF (said flat end facet is in direct contact with the substance filling the cavity). The second reflected optical signal corresponds to the reflection of the probe optical signal into the substance-sample interface. In other words, the second reflected optical signal is the signal generated due to the reflection of the probe optical signal in the flat end tip of the ferrule (said flat end tip of the ferrule, and more particularly, the flat outer surface of the substance or material, being in direct contact with the sample).

Then, the interference pattern is normalized and the Fast Fourier Transform (FFT) of the normalized interference pattern is obtained. The refractive index of the sample is determined based on the amplitude and the phase of the FFT of the normalized interference pattern. By means of the amplitude and phase of the FFT, a value that correlates unambiguously with the refractive index of the sample is obtained.

Obtaining the refractive index of the sample comprises determining a value "S" from the equation:

$$S = \pm A_F \cdot \frac{\cos \phi F}{|\cos \phi F|}$$

wherein "$A_F$" is the amplitude of the FFT of the normalized interference pattern and "$\phi F$" is the phase of the FFT of the normalized interference pattern. This value "S" correlates unambiguously with the refractive index of the sample under test.

The method further comprises comparing the obtained value "S" with previously calculated normalized reference values "S", the normalized reference values "S" being associated to corresponding reference refractive indices and determining the refractive index of the sample based on the comparison.

This method for measuring a refractive index of a sample can be also used to identify the sample based on its measured refractive index (for example, by comparing the measured refractive index with a table of known refractive indices) and also to identify the presence of a substance in the proximity to the refractometer when, for example, said refractometer measures a refractive index measure that is different from 1 (refractive index that corresponds to air).

When the distance "d" of the interferometric fiber optic refractometer is within a range between 125 and 150 $\mu$m

(long cavity) the method comprises injecting the probe optical signal with a wavelength of 1550 nm.

In some embodiments, when the distance "d" of the interferometric fiber optic refractometer is within a range between 40 and 80 $\mu$m (short cavity) the method comprises injecting the probe optical signal with a wavelength of 850 nm.

The methods and the interferometric fiber optic refractometer herein described present several advantages and/or differences compared with previous devices and techniques. In particular, it is provided an interferometric fiber optic refractometer that comprises a cleaved or polished SMF inside a standard ferrule and a cavity with controllable dimensions is left between the flat end facet of the SMF and the flat end of the ferrule. The cavity can be tailored to achieve interference patterns with controllable visibilities and periods, allowing controlling the performance of the interferometric fiber optic refractometer. By means of the amplitude and phase of the Fast Fourier Transform of the interference pattern, a value that correlates unambiguously with the refractive index of the sample under test is obtained. The interferometric fiber optic refractometer herein described is able to operate in a broad wavelength range, from 800 to 1600 nm approximately, and can achieve sufficient resolution needed in most industrial applications, e.g., a resolution of $2.3 \times 10^{-5}$ approximately. Besides, its manufacturing method presents low complexity and is easily reproducible.

## BRIEF DESCRIPTION OF THE DRAWINGS

To complete the description and in order to provide for a better understanding of the invention, a set of drawings is provided. Said drawings form an integral part of the description, which should not be interpreted as restricting the scope of the invention, but just as examples of how the invention can be carried out.

The drawings comprise the following figures:

Figure 1 shows a cross-section view of an interferometric fiber optic refractometer, according to a particular embodiment of the invention outside the subject-matter of the claims.

Figure 2 shows a scheme of a system for measuring the refractive index of samples that makes use of the interferometric fiber optic refractometer of Figure 1, according to a particular embodiment of the invention outside the subject-matter of the claims.

Figure 3 shows a flow diagram of a method for manufacturing an interferometric fiber optic refractometer, according to a particular embodiment of the invention.

Figure 4 shows a flow diagram of a method for measuring a refractive index of sample, according to a particular embodiment of the invention outside the subject-matter of the claims.

Figure 5 shows a graph representing the value of the coupling coefficient of the interferometric fiber optic refractometer as a function of the cavity length for two different wavelengths.

Figure 6A shows three graphs of normalized interference patterns of an interferometric fiber optic refractometer for three different refractive indices of a sample.

Figure 6B shows a graph with the corresponding visibility as a function of refractive index of the sample for four values of the coupling coefficient "$\eta$".

Figure 7A shows five graphs representing respective normalized interference patterns of an interferometric fiber optic refractometer for different refractive indices "$n_s$" of samples.

Figure 7B shows five graphs with the corresponding amplitudes of the FFT of the normalized interference patterns of Figure 7A as a function of the frequency.

Figure 8 shows a graph representing the normalized value "S" as a function of refractive index "$n_s$".

Figure 9A shows a graph representing the normalized interference pattern of an interferometric fiber optic refractometer at different temperatures.

Figure 9B shows a graph representing the amplitude of the FFT of the normalized interference pattern of Figure 9A.

Figure 10A shows five graphs representing respective normalized interference patterns of an interferometric fiber optic refractometer observed at different refractive indices of the sample.

Figure 10B shows a graph representing the normalized value "S" as a function of the refractive index "$n_s$" that is calculated from the normalized interference patterns of Figure 10A.

## DETAILED DESCRIPTION OF THE INVENTION

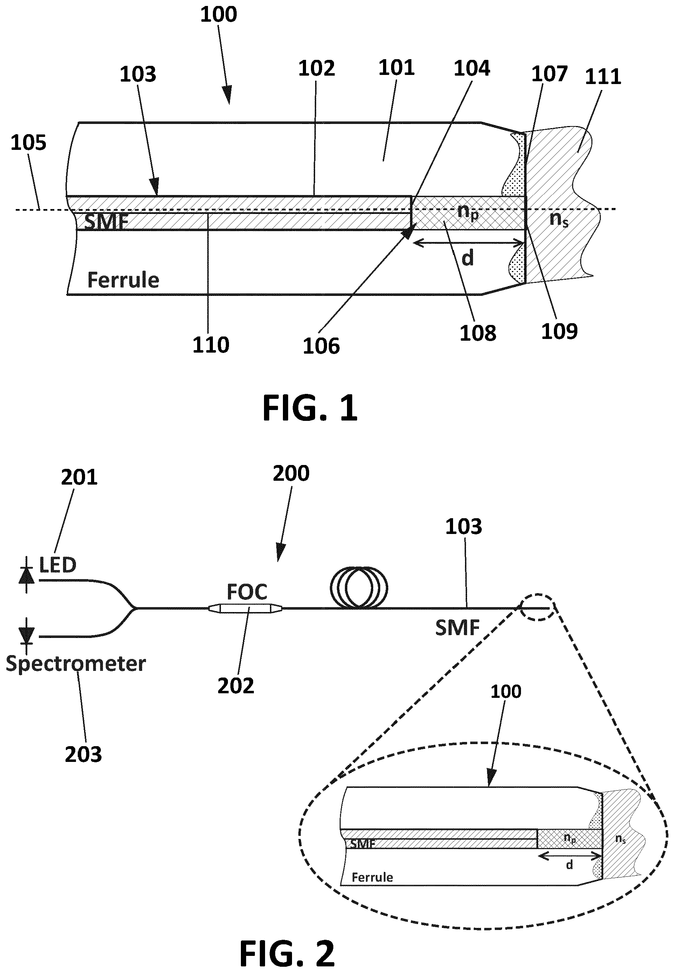

Figure 1 shows a cross-section view (along its longitudinal axis) of an interferometric fiber optic refractometer 100, according to a particular embodiment of the invention outside the subject-matter of the claims. It should be understood that the interferometric fiber optic refractometer 100 of Figure 1 may include additional components and that some of the components described herein may be removed and/or modified without departing from the scope of the described interferometric fiber optic refractometer 100. Additionally, implementation of the interferometric fiber optic refractometer 100 is not limited to such embodiment.

The interferometric fiber optic refractometer 100 comprises a ferrule 101 with a longitudinal through hole 102.

The interferometric fiber optic refractometer 100 further comprises a SMF 103 having a flat end facet 104 that is substantially perpendicular to the longitudinal axis 105 of the SMF 103 and thus, of the ferrule 101. The SMF 103 is inserted within the longitudinal through hole 102 of the ferrule 101 such that the flat end facet 104 of the SMF 103 is located at a distance "d" from the end (tip) 107 of the ferrule 101. The distance "d" defines the length of the cavity 106 and thus, its volume (the diameter of the cavity 106 corresponds to the diameter of the through hole 102) located between the flat end facet 104 of the SMF 102 and the tip 107 of the ferrule 101. The cavity 106 is completely filed with a substance or material 108, whose refractive index is "$n_p$", that forms a flat end tip 109 of the ferrule 101 and that is substantially parallel to the flat end facet 104 of the SMF 102. The refractive index "$n_p$" of the substance 108 is different from the refractive index "$n_f$" of the core 110 of the SMF 103.

The substance 108 is a commercial polymer known as NOA81 (from Norland Optical Adhesives®). The substance 108 may be any other material with a refractive index "$n_p$" that is different from the refractive index "$n_f$" of the core 110 of the SMF 103 and that is able to be inserted within the cavity 106. For example, the substance may be any fluid compound or combination of compounds with the ability of solidifying under specific conditions (e.g., when subjected to temperature variations, to UV-light, etc.) or may be a solid piece made of a compound or combination of compounds that is insertable within the cavity 106. NOA81 108, that is a temperature curable polymer that, once inserted within the cavity 106, can be cured at predefined temperature for a predefined period of time, e.g., during 12 hours and at 60°C, to improve the adhesion of the polymer to the flat end facet 104 of the SMF 103 and to the inner surface of the through hole 102 of the ferrule 101. The SMF may be any optical fiber designed to carry only one single mode of light. For example, the SMF may be the 780-HP fiber whose single mode operation wavelength is between 780-970 nm and whose core refractive index is about 1.4600 or another fiber as for example Corning SMF-28 whose single mode operation wavelength is between 1260-1650 nm and whose core refractive index is about 1.4504, among many other single mode fibers.

To achieve the flat surface of the end facet 104 of the SMF 103, the SMF 103 can be cleaved with a conventional fiber cleaver and then it can be polished, e.g., during 10 seconds, with a fiber polisher to improve the flatness of the facet 104. To achieve the flat surface at the tip 107 of the ferrule 101, the tip 107, and more particularly the polymer 108 protruding from the opening of the longitudinal through hole 102 located at the tip 107 of the ferrule 101, can be polished during a predefined period of time, e.g., during 10 seconds, with a fiber polisher. In this manner, two flat interfaces perpendicular to each other are achieved; one formed between the SMF 103 and the polymer 108 (interface SMF-substance), and the other between the polymer 108 and the sample 111 (interface substance-sample).

The interferometric fiber optic refractometer 100 is configured to measure the refractive index "$n_s$" of a sample 111 deposited on the tip 107 of the ferrule 101 based on an observed interference pattern of the interferometric fiber optic refractometer 100. In other words, based on the interference pattern generated due to the reflection of an injected probe optical signal into the two interfaces, the refractive index of the sample 111 under test can be derived. More particularly, the refractive index "$n_s$" of a sample 111 can be derived from the amplitude and phase of the FFT of the normalized interference pattern. Alternatively, the tip 107 of the ferrule 101 may be inserted into the sample 111. For example, the sample 111 may be a liquid, and the tip 107 of the ferrule 101 may be inserted into said liquid to measure its refractive index.

Figure 2 shows a system 200 for measuring the refractive index of a sample 111 that falls outside the scope of the invention, the system making use of the interferometric fiber optic refractometer 100 of Figure 1. It should be understood that the system 200 of Figure 2 may include additional components and that some of the components described herein may be removed and/or modified without departing from a scope of the described system 200. Additionally, implementation of the system 200 is not limited to such embodiment.

The system 200 comprises a light source 201, for example a LED, that generates a probe optical signal with a wavelength that may range from 800 to 1600 nm and that propagates along the SMF 103 passing through a Fiber Optic Coupler (FOC) 202 or a circulator. Said probe optical signal reflects on both interfaces of the interferometric fiber optic refractometer 100 generating two reflected optical signals which propagate along the SMF 103 passing through the a FOC or circulator 203 until they are gathered by the spectrometer 203 that is used to analyse the corresponding interference pattern (superimposed reflected optical signals) of the interferometric fiber optic refractometer. Based on said interference pattern the refractive index of the sample 111 can be derived. Alternatively, instead of using a LED for generating the probe optical signal and a spectrometer for gathering the reflected optical signals and thus, the generated interference patterns, a respective tuneable laser and photodetector could be also employed.

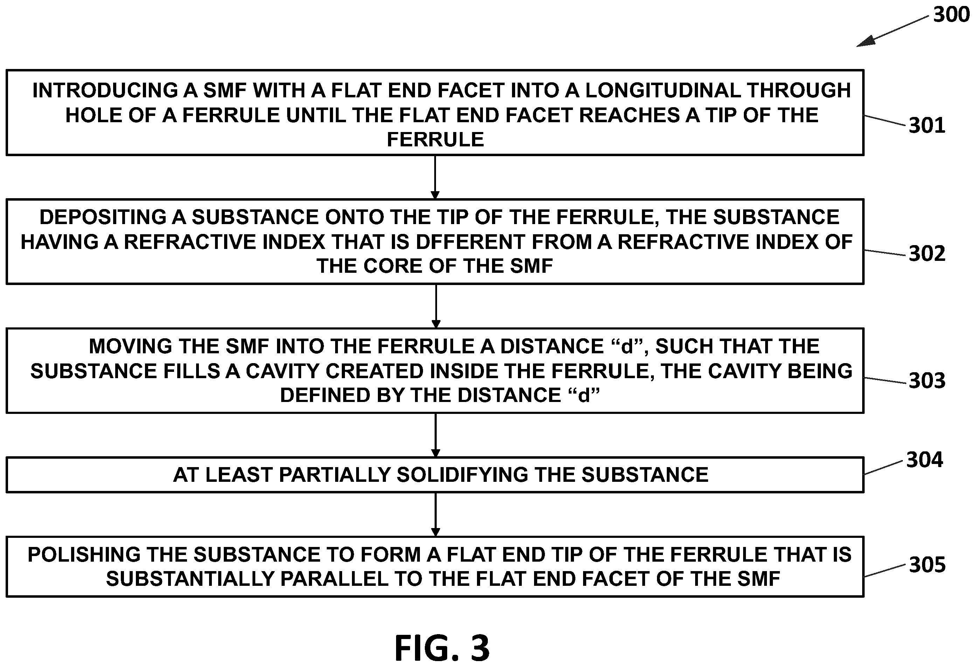

Figure 3 shows a flow diagram of a method 300 for manufacturing an interferometric fiber optic refractometer, according to the invention.

At step 301 of the method 300, a SMF with a flat end facet is introduced into a longitudinal through hole of a ferrule until the flat end facet reaches the end of the ferrule, i.e., the tip of the ferrule. This previously polished flat end facet of the SMF is substantially perpendicular to the longitudinal axis of the SMF and thus, to the longitudinal axis of the ferrule.

At step 302 of the method 300, a substance or material is deposited onto the end (tip) of the ferrule. More particularly, this substance or material is mainly deposited onto the flat end facet of the SMF that is substantially aligned with the end surface of the ferrule. The substance or material has a refractive index that is different from the refractive index of the core of the SMF. Alternatively, the tip of the ferrule may be inserted into the sample.

At step 303 of the method 300, the SMF is moved towards the inside of the ferrule a distance "d", such that the substance fills, by surface tension, the cavity created inside the ferrule. Due to surface tension, the fiber sucks out the substance or material as it moves and thus, a cavity of length "d" filled with the substance is formed at the end of the ferrule. This distance "d" defines the cavity created inside the ferrule. The volume of the cavity will depend on the controllable distance "d". The substance or material is, preferably, in fluid state to facilitate its introduction into the cavity.

At step 304 of the method 300, the substance or material is subjected to a solidification process so it is at least partially solidified. The degree of solidification to which the substance or material is subjected should be high enough to allow the subsequent polishing operation. This solidification process may depend on the chemical properties of the substance or material. If the substance is a UV-curable polymer, the solidification may comprise applying a UV-light from a UV-light source to the UV-curable polymer for a predefined period of time. On the contrary, if the substance is a temperature curable polymer, then, a temperature variation generated by a heat or cold generation source may be applied to the temperature curable polymer.

At step 305 of the method 300, the tip of the ferrule, and more particularly, the substance or material that may protrude from the end surface (tip) of the ferrule is polished to form a flat end tip of the ferrule. This flat end tip of the ferrule, and more particularly, the flat end surface of the substance or material, is substantially parallel to the flat end facet of the SMF.

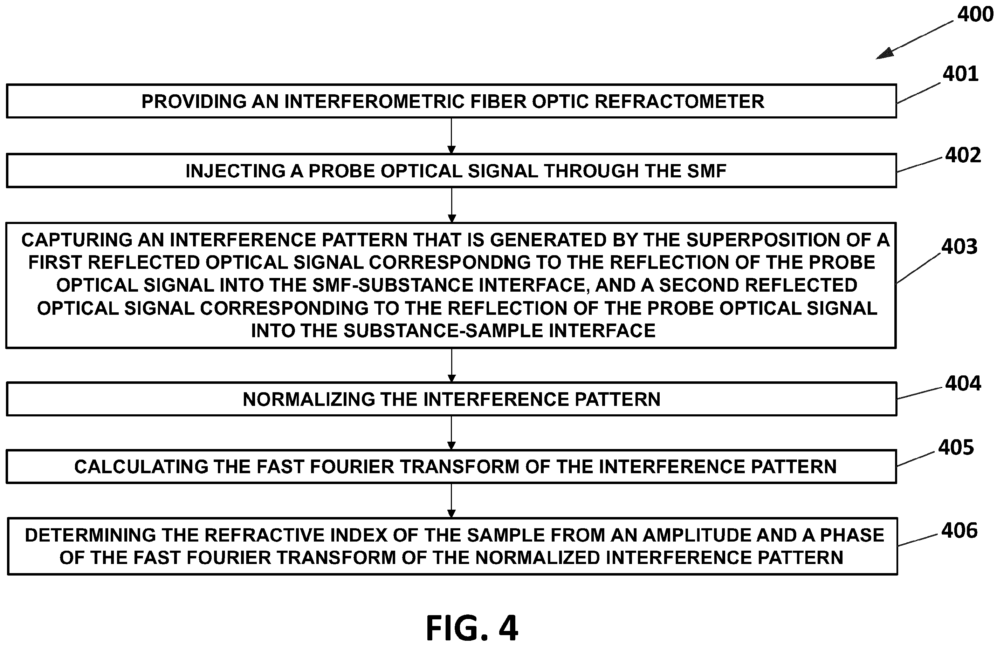

Figure 4 shows a flow diagram of a method 400 for measuring a refractive index of sample that makes use of the interferometric fiber optic refractometer of Figure 1, according to a particular embodiment of the invention outside the subject-matter of the claims.

At step 401 of the method 400, an interferometric fiber optic refractometer as previously described is provided. A sample-under-test from which the refractive index is to be measured is then placed onto the tip of the ferrule.

At step 402 of the method 400, a probe optical signal generated by, for example, a LED or any other light source, is injected through the SMF.

At step 403 of the method 400, an interference pattern of the interferometric fiber optic refractometer is captured by, for example, a spectrometer or a photodetector. The interference pattern is generated by the superposition of a first reflected optical signal that corresponds to the reflection of the probe optical signal into the SMF-substance interface and a second reflected optical signal that corresponds to the reflection of the probe optical signal into the substance-sample interface.

Then, at step 404 of the method 400, the interference pattern is normalized. At step 405 of the method 400, the FFT of the normalized interference pattern is calculated.

At step 406 of the method 400, the refractive index of the sample is determined based on the amplitude and the phase of the FFT of the normalized interference pattern previously calculated. By means of the amplitude and phase of the FFT, a value that correlates unambiguously with the refractive index is obtained. This obtained value will be compared with other normalized reference values previously calculated which are associated to corresponding reference refractive indices. Based on this comparison, the refractive index of the sample-under-test can be determined.

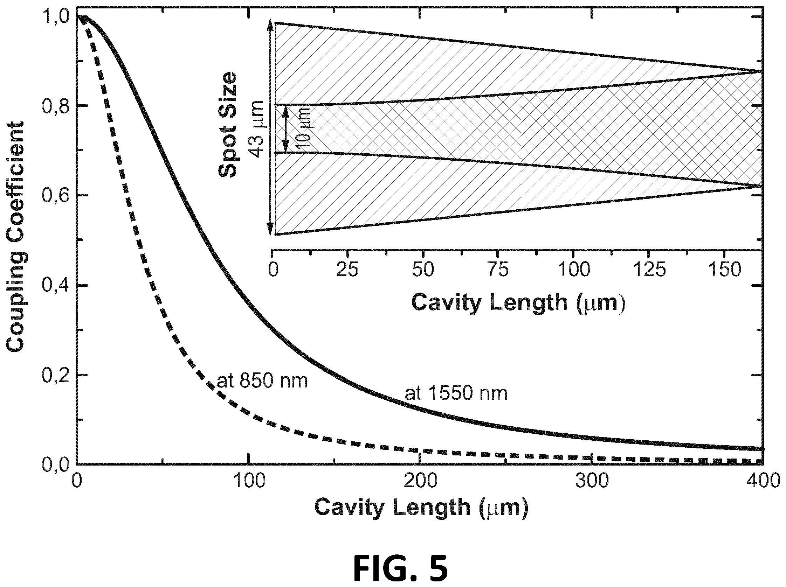

Figure 5 shows a graph representing the value of the coupling coefficient of an interferometric fiber optic refractometer as a function of the cavity length "d" for two different wavelengths of the injected probe optical signal.

To explain the working mechanism of the interferometric fiber optic refractometer herein disclosed, it is important to understand the beams that participate in the interference generating the interference pattern of the interferometric fiber optic refractometer. For the sake of clarity, this working mechanism will be described in relation to the interferometric fiber optic refractometer of Figure 1, although it is contemplated that the working mechanism may serve for any other suitable interferometric fiber optic refractometer. As the optical fiber 103 used to fabricate the interferometric fiber optic refractometer 100 shown in Figure 1 is single mode, two Gaussian beams (optical signals) participate in the interference. A first beam is internally reflected from the SMF-polymer interface (flat end facet 104) and the other beam is reflected from the polymer-sample interface (flat end tip 109). The amplitude coefficient of the beam reflected from the SMF-polymer interface is denoted as "$r_1 = (n_f - n_p)/(n_f + n_p)$", where "$n_f$" and "$n_p$" are the refractive index of the SMF core 110 and of the polymer 108, respectively. The amplitude coefficient of the beam reflected from the polymer-sample interface is "$r_2 = (n_p - n_s)/(n_p + n_s)$", where "$n_s$" is the refractive index of the sample 111. The values of "r1" and "r2" are valid whatever the polarization state of the injected probe beam. As the cavity 106 of the interferometric fiber optic refractometer 100 has no core, the Gaussian beam that reflects from the polymer-sample interface will return broader to the SMF 103 due to diffraction.

The total reflected intensity of the interferometric fiber optic refractometer 100 depicted in Figure 1 is the superposition of two Gaussian beams, in particular of the first beam and the second beam, the second beam being broader than the first beam. This superposition of the two Gaussian beams (reflected optical signals) give rise to an interference pattern of the interferometric fiber optic refractometer 100. The interference pattern is a signal at the same wavelength than the reflected optical signals and whose amplitude and phase is the sum of the respective amplitudes and phases of the reflected optical signals. The intensity measured by a spectrometer or a photodetector in detection will be periodic in wavelength ($\lambda$). Said intensity ($I_r$) can be expressed as:

$$I_r = r_1^2 + \eta r_2^2 (1 - r_1)^4 + 2\eta r_1 r_2 (1 - r_1)^2 \cos(2\phi) \qquad (1)$$

In Eq. (1), $\phi = 2\pi d n_p/\lambda$. is the phase difference between the two Gaussian beams. The factor "$\eta$" is called the coupling coefficient or the overlapping coefficient of the two Gaussian beams. Such a factor can be expressed as:

$$\eta = \left(\pi n_p w_0^2\right)^2 / [d^2\lambda^2 + (\pi n_p w_0^2)^2] \qquad (2)$$

In Eq. (2), "$w_0$" is the radius of the Gaussian beam at the output of the SMF 103, which is approximately a half of the mode field diameter of the SMF 103. Note from Eq. (2) that "$\eta$" is independent on the refractive index "$n_s$" of the sample 111. On the other hand, the SMF 103, the polymer 108 filing the cavity 106, i.e., "$n_p$", and the light source ("$\lambda$") can be chosen to fabricate and excite the refractometer 100. Thus, the critical parameter to control "$\eta$", hence "$I_r$", and consequently, the performance of the refractometer 100, is the size of the cavity 100 or "d". As it was mentioned above, "d" can be controlled with nanometer precision with a computer-controlled translation stage. Another important factor is the flatness of the interfaces from which the Gaussian beams reflect. In the present solution, this is not an issue as the two reflecting surfaces are cleaved and/or polished and are parallel to each other.

The graph of Figure 5 shows the evolution of "$\eta$" for different values of "d" (length of the cavity 106) and for two wavelengths (850 nm and 1550 nm). For the calculations, it has been assumed the following values: "$w_0$" = 5 $\mu$m when "$\lambda$" = 1550 nm, and "$w_0$" = 2.5 $\mu$m when "$\lambda$" = 850 nm. The value of the refractive index of the NOA81 polymer 108 is calculated with the following equation provided by the manufacturer: "$n_p = A + B/\lambda^2 + C/\lambda^4$", with A = 1.5375, B = 8290.45, and C = -2.11046x10$^8$. Thus, at $\lambda$ = 1550 nm, $n_p$ = 1.5409, and at $\lambda$ = 850 nm $n_p$ = 1.5485. It can be noted from the figure that "$\eta$" drops faster when the wavelength of the injected probe optical signal is 850 nm. The inset of Fig. 5 shows the propagation (at 1550 nm) of a Gaussian beam when it leaves the SMF, travels a distance "d" = 163 $\mu$m (cross shading), and returns (inclined shading) to the SMF after being reflected from the flat end surface of the polymer 108 (tip of the ferrule). As can be seen in said inset, the spot size of the injected probe optical signal is about 10 $\mu$m (substantially corresponding to the diameter of the core 110 of the SMF 103) when enters the cavity and about 43 $\mu$m when returns to the flat end facet 104 after being reflected. This widening of the spot size is due to the fact that the cavity 106 has no core.

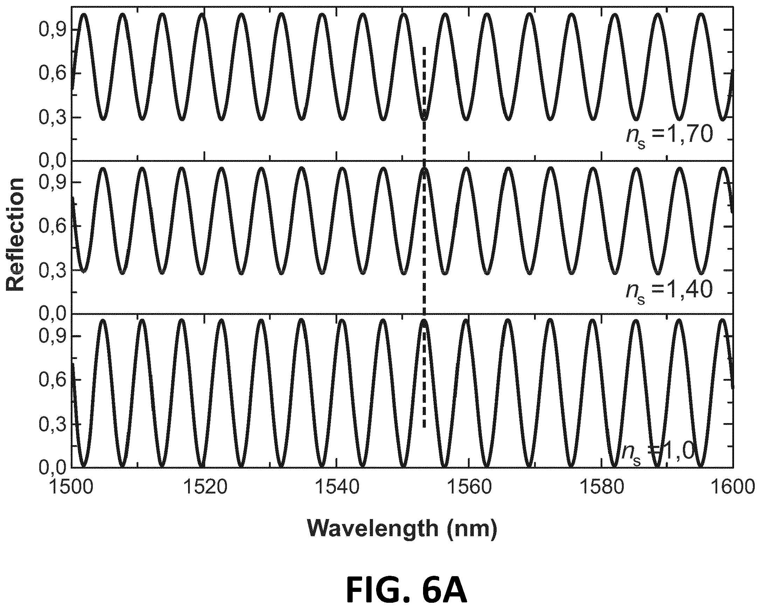

Figure 6A shows three graphs of the obtained normalized interference pattern of an interferometric fiber optic refractometer with "d" = 125 $\mu$m, "$n_p$" = 1.5409, and "$\eta$" = 0.2, for three corresponding values of "$n_s$". The dotted vertical line shows an arbitrary point in the graph.

Specifically, the graphs show the normalized theoretical interference pattern of an interferometric fiber optic refractometer calculated with Eq. (1) for three different values of "$n_s$" that are indicated in the figure ($n_s$ = 1.70 upper graph, $n_s$ = 1.40 middle graph, $n_s$ = 1.0 lower graph). It can be noted from these graphs that the interference pattern of the interferometric fiber optic refractometer compresses (the distance between maximums and minimums in the interference pattern shrinks) when "$n_s$" > 1. It can be also noted that when "$n_s$" > "$n_p$", the maxima of the interference pattern change to minima, and vice versa, due to a $\pi$-phase change of the reflected light (see the dotted vertical line).

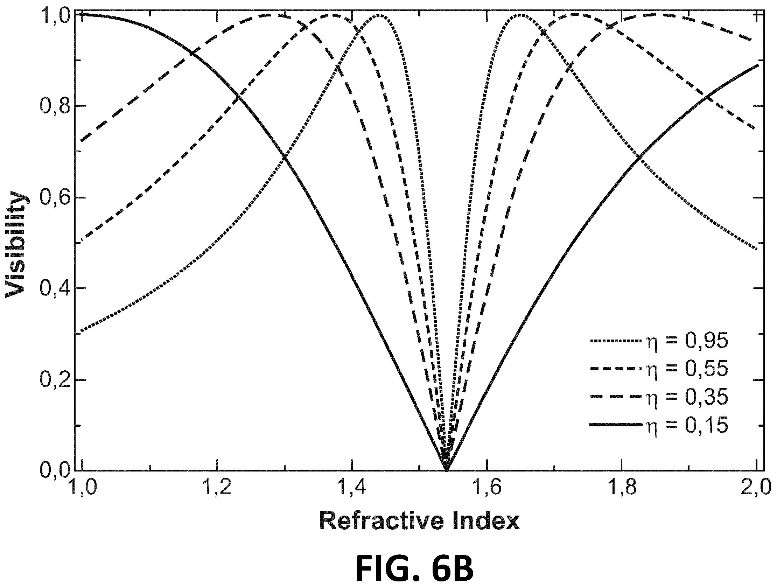

Figure 6B shows another graph with the corresponding visibility as a function of refractive index of the sample for four values of "$\eta$". In particular, this graph shows the visibility of the normalized interference pattern of the interferometric fiber optic refractometer of figure 6A as a function of the refractive index of the sample ("$n_s$") for different values of "$\eta$" ("$\eta$" =0.95, 0.55, 0.35 and 0.15). Visibility is defined herein as the difference over the sum of the maximum and minimum of the interference pattern. Therefore, the visibility can be calculated by finding the maximum and minimum values of Eq. (1), or directly from the graphs shown in figure 6A. For the calculations of visibility, it has been assumed four different values of "$\eta$", which correspond to interferometric fiber optic refractometers having cavities selected among short and long cavities. It can be seen from figure 6B that between two and four values of "$n_s$" give the same value of visibility. For example, with "$\eta$" = 0,95, for "$n_s$" = 1,45 and 1,65, the visibility will be 1 (approx.). Thus, if the visibility factor is correlated with "$n_s$" the interferometric fiber optic refractometer will present ambiguity issues and will be impractical no matter the dimensions of the cavity.

To overcome the aforementioned drawbacks, the following procedure has been implemented. First, an interferometric fiber optic refractometer as the one shown in figure 1 (or any other suitable refractometer as herein described) and with a long cavity (or small value of "$\eta$") is fabricated. For example, "d" may be within the range 125-180 $\mu$m ("$\eta$" may be within the range 0.15-0.20) The visibility of the normalized interference pattern of such an interferometric fiber optic refractometer is 1 approximately when the external medium is air, i.e., when "$n_s$" = 1. Then, the interference patterns are collected when the interferometric fiber optic refractometer is in contact with the substances whose refractive index is to be measured. All the interference patterns are collected and normalized. Then, the amplitude and phase of the FFTs of the normalized interference patterns are calculated. Lastly, the value of "S" is calculated. Each value of "$n_s$" or refractive index of a sample will be unequivocally associated to a unique value of "S".

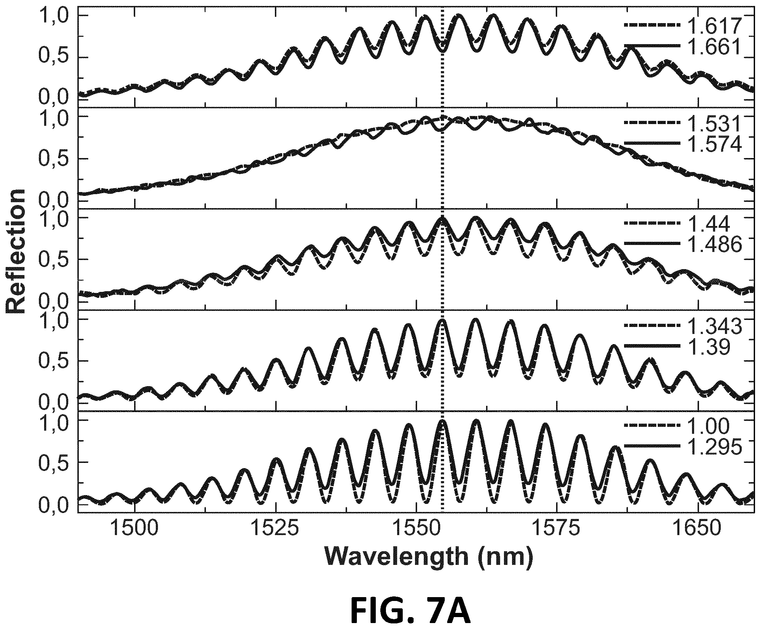

Figure 7A shows five graphs representing respective normalized interference patterns of an interferometric fiber optic refractometer fabricated with "d" = 125 $\mu$m and "$n_p$" = 1.5409 for different values of "$n_s$". The values of "$n_s$" are the

refractive indices of calibrated oils that were calculated with the Cauchy equation for each oil provided by the manufacturer. The interferometric fiber optic refractometer and the oils are at 25 °C (ambient temperature). The vertical dotted line shows the change from maxima to minima in the graphs.

In particular, Figure 7A shows the normalized interference patterns of an interferometric fiber optic refractometer fabricated with NOA81 polymer and with "d" = 125 $\mu$m when it was in contact with different calibrated refractive index liquids whose refractive indices are indicated in the figure ("$n_s$"= 1.617, 1.661, 1.531, 1.574, 1.44, 1.486, 1.343, 1.39, 1.00 and 1.295). It can be noted that the visibility (difference between maxima and minima) reduces gradually as "$n_s$" increases and reaches a minimum value when "$n_s$" is approximately equal to "$n_p$" ("$n_p$" = 1.5409). Then, the visibility increases gradually when "$n_s > n_p$" but due to a phase change of the reflected optical signal, the maxima changed to minima, see the vertical dotted line in the figure. In a practical situation, the measurement of visibility is not useful as two values can give the same result (ambiguity issues). Thus, the analysis of the interference pattern is to be done in the Fourier domain.

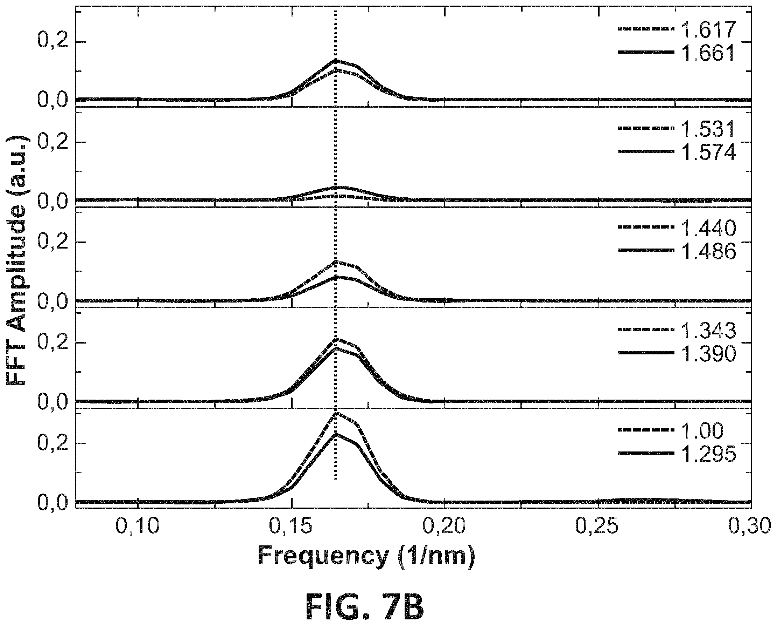

Figure 7B shows five graphs with the corresponding amplitude of the FFT of the normalized interference patterns of Figure 7A as a function of the frequency. The vertical dotted line shows the maximum amplitude value of the FFT.

In such figure, the FFT of each normalized interference pattern in Figure 7A is shown. The amplitude of the FFT ($A_F$) decreases when "$n_s < n_p$" and increases when "$n_s > n_p$". The height of the FFT or "$A_F$" can be easily correlated with "$n_s$" by using as reference the amplitudes of the FFT of the normalized interference patterns previously obtained for each one of the calibrated refractive index liquids. However, as in the case of visibility, two values of "$n_s$" can give the same value of "$A_F$". This ambiguity can be eliminated if the phase of the FFT ($\phi_F$) is also considered, which is provided in the FFT result. Due to phase changes, the value of "$\cos(\phi_F)$" -or "$\sin(\phi_F)$"- has the same sign for all values of "$n_s$" that are smaller than "$n_p$" and opposite sign for all values of "$n_s$" bigger than "$n_p$". Thus, by normalizing the value of $\cos(\phi_F)$, to take into account exclusively its sign, it is possible to determine "$n_s$" without ambiguity with the following equation:

$$S = -A_F \cdot [\cos(\phi_F)/|\cos(\phi_F)|] \qquad (3)$$

By means of the FFT, the values of "$A_F$" and "$\cos(\phi_F)$", hence of "S", can be calculated easily for any value of "$n_s$".

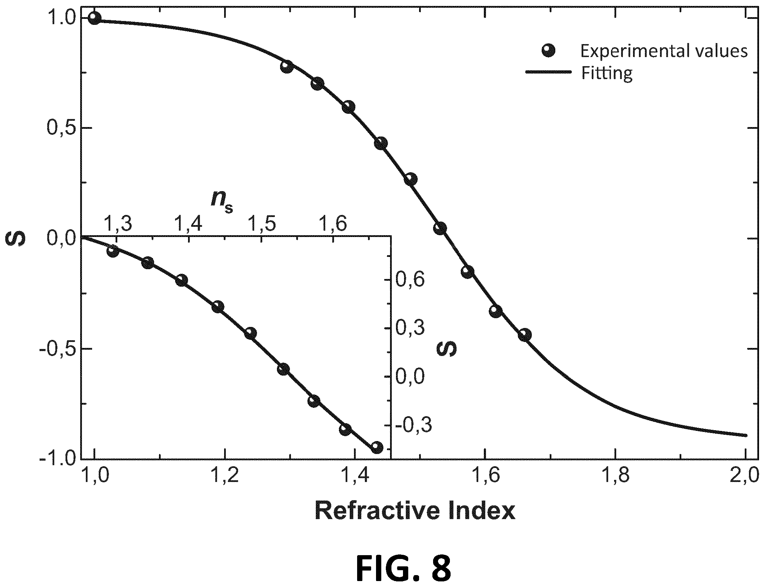

Figure 8 shows a graph representing the normalized value "S" as a function of refractive index "$n_s$". The parameters of the interferometric fiber optic refractometer are: "$n_p$" = 1.5409 and "d" = 125 $\mu$m. The measurements were carried out in the 1500-1600 nm wavelength range.

The solid dots are experimental points and the solid line is a fitting that has been extrapolated to "$n_s$" = 2. The inset graph shows only the values of "S" obtained with calibrated refractive index oils. The measuring range of the interferometric fiber optic refractometer described in this figure is broad. Based on this figure, the interferometric fiber optic refractometer herein described is able to measure refractive indices between 1 and 2. It can be noted that there is a one to one relationship between "S" and "$n_s$".

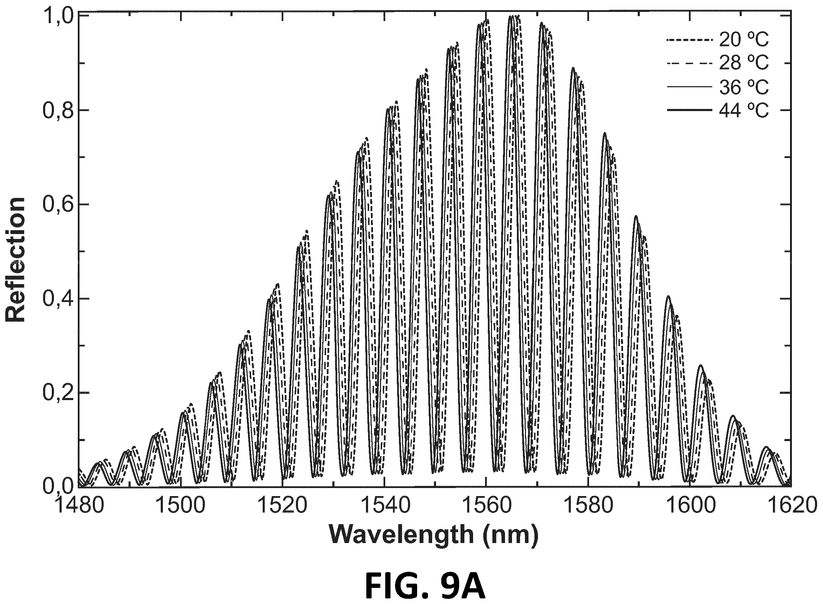

Figure 9A shows a graph representing the normalized interference patterns of an interferometric fiber optic refractometer (fabricated with NOA81 polymer and wherein "d" = 125 $\mu$m and "$n_s$" = 1) at different temperatures (T= 20, 28, 36 and 44 °C).

To analyse the effect of temperature on the interferometric fiber optic refractometer, it has been placed in a temperature chamber where the external medium was air. The interferometric fiber optic refractometer was exposed to temperatures between 20 to 50 °C. The observed interference pattern slightly shifts as the polymer that fills the cavity is temperature sensitive.

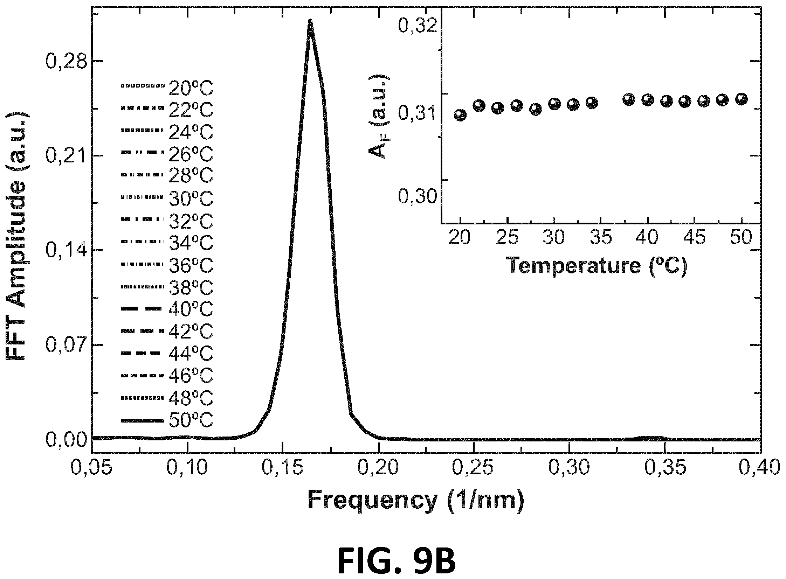

Figure 9B shows a graph representing the amplitude of the FFTs of the normalized interference patterns obtained at different temperatures (T= 20, 22, 24, 26, 28, 30, 32, 34, 36, 38, 40 ,42,44, 46, 48 and 50 °C) for the interferometric fiber optic refractometer of Figure 9A. All these amplitudes "$A_F$" overlap with each other. The inset graph shows the value of "$A_F$" as a function of temperature. It can be seen how the amplitude of the FFT does not change with temperature. Therefore, it can be concluded, that temperature does not affect the measurements of refractive index. In other words, interferometric fiber optic refractometer according to the present solution is temperature independent. Hence, the interferometric fiber optic refractometer disclosed herein does not need additional reference sensors or a mechanism to keep the temperature constant.

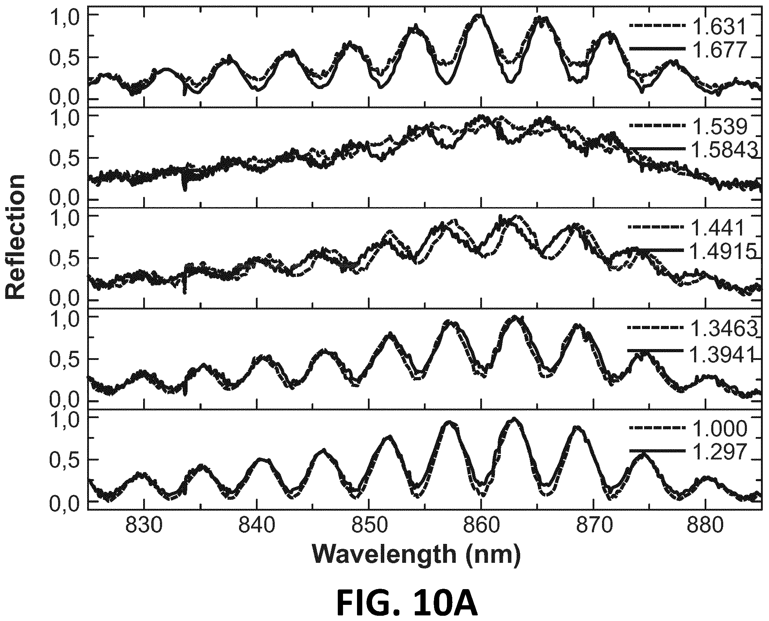

Figure 10A shows five graphs representing respective normalized interference patterns of an interferometric fiber optic refractometer made with polymer NOA81 and "d" = 45 $\mu$m when it was in contact with different calibrated refractive index liquids whose refractive indices are indicated in the figure ("$n_s$"= 1.617, 1.661, 1.531, 1.574, 1.44, 1.486, 1.343, 1.39, 1.00 and 1.295).

The interferometric fiber optic refractometer comprises a SMF working at 850 nm and having "$w_0$" = 2.5 $\mu$m. Thus, due to the small core of the SMF and the short wavelength, the Gaussian beam broadens faster; hence, shorter cavities give small values of "$\eta$", see the dotted line of Figure 5. The important requirement is to achieve high visibility, close to 1, when the external medium is air. The fabrication process of the interferometric fiber optic refractometer with the SMF at 850 nm is the same previously described. The polymer that was used was also NOA81. A cavity with length "d" = 45 $\mu$m gives interference patterns of maximum visibility when "ns" = 1. As can be seen form Figure 10A, the visibility reduces gradually

as "$n_s$" increases and reaches a minimum value when "$n_s$" is approximately equal to "$n_p$" ("$n_p$" = 1.5409).

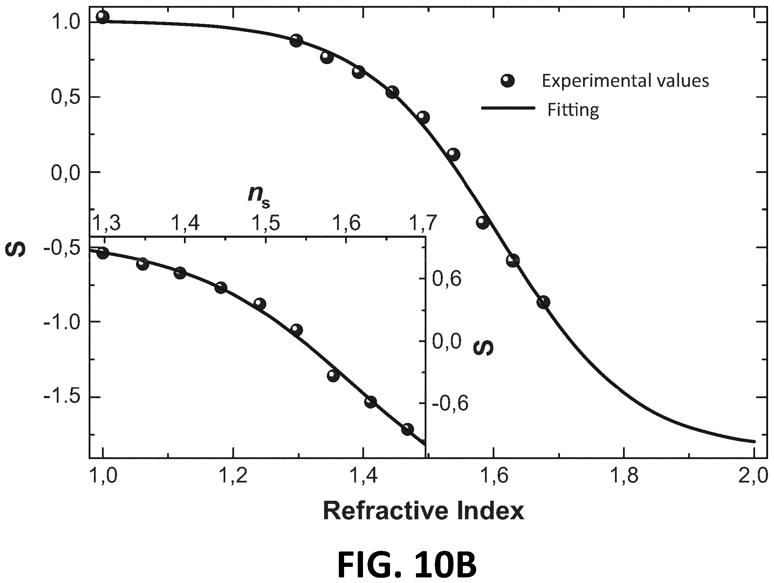

Figure 10B shows a graph representing the normalized value of "S" as a function of the refractive index "$n_s$" that were calculated from the normalized interference patterns shown in Figure 10A. The solid dots are experimental points and the continuous line is a fitting to the experimental points. The inset plot is a closed up.

The solid dots are experimental points and the solid line is a fitting that has been extrapolated to "$n_s$" = 2. Based on this figure, it can be noted that the measuring range of the interferometric fiber optic refractometer is also wide and the ambiguity issues are eliminated. It should be pointed out that the measurements shown in Figures 10A and 10B were carried out at ambient temperature.

It can be further noticed from Figures 8 and 10B that the fitting to the experimental data leads to a curve of sigmoidal shape, no matter the wavelength of the light source. In both plots, the value of "S" and "$n_s$" are related with the following expression:

$$S = S_1 + (S_2 - S_1)/[1 + 10^{(n_0 - ns)p}] \qquad (4)$$

In Eq. (4), "$S_2$" and "$S_1$" are values of the fitting curve that can be calculated for a particular fiber optic refractometer. The fitting value when "S" = 0 is denoted as "$n_0$". In the examples of Figures 8 and 10B, such value is close to "$n_p$". Finally, "p" is the slope of the fitting curve and "S" is the signal that is obtained when the index is "$n_s$". Therefore, according to Eqs. (3) and (4), a measured value of "S" will lead to a unique value of "$n_s$" no matter the value of it in the range between 1 and 2.

All the results shown in figures 5 to 10 were obtained taking into consideration the following: the interference patterns of the different examples of interferometric fiber optic refractometers were taken and normalized when "$n_s$" = 1 (normalization is important to eliminate possible fluctuations of the optical source or losses caused by mechanical connectors). Before doing that, the surface of the polymer at the end of the ferrule was clean and dried. The amplitude and phase of the FFT were calculated from the normalized spectra. The value "S" can be normalized, thus, "S" = 1 when "$n_s$" = 1. Then, the amplitude and phase of the FFT were calculated from the normalized interference patterns when the interferometric fiber optic refractometers were immersed in calibrated refractive index liquids.

In this text, the term "comprises" and its derivations (such as "comprising", etc.) should not be understood in an excluding sense, that is, these terms should not be interpreted as excluding the possibility that what is described and defined may include further elements, steps, etc. The term "other" or "another" as used herein, is defined as at least a second or more. The term "coupled," as used herein, is defined as connected, whether directly without any intervening elements or indirectly with at least one intervening elements, unless otherwise indicated. Two elements can be coupled mechanically, electrically, or communicatively linked through a communication channel, pathway, network, or system.

The invention is obviously not limited to the specific embodiments described herein, but also encompasses any variations that may be considered by any person skilled in the art (for example, as regards the choice of materials, dimensions, components, configuration, etc.), within the general scope of the invention as defined in the claims.

**Claims**

1.  A method (300) for manufacturing an interferometric fiber optic refractometer (100), **characterized in that** it comprises the following steps:

    introducing (301) a single mode fiber (103) with a flat end facet (104) into a longitudinal through hole (102) of a ferrule (101) until the flat end facet (104) reaches an end (107) of the ferrule (101), the flat end facet (104) being substantially perpendicular to a longitudinal axis (105) of the single mode fiber (103);
    depositing (302) a substance (108) onto the end (107) of the ferrule (101), the substance (108) having a refractive index that is different from a refractive index of a core (110) of the single mode fiber (103);
    moving (303) the single mode fiber (103) into the ferrule (101) a distance "d", such that the substance (108) fills a cavity (106) created inside the ferrule (101) by surface tension, the cavity (106) being defined by the distance "d";
    at least partially solidifying (304) the substance (108); and
    polishing (305) the at least partially solidified substance (108) to form a flat end tip (109) of the ferrule (101) that is substantially parallel to the flat end facet (104) of the single mode fiber (103).

2.  The method (300) for manufacturing an interferometric fiber optic refractometer (100), according to claim 1, comprising maintaining the single mode fiber (103) and the ferrule (101) in a vertical position during the depositing and moving steps.

3. The method (300) for manufacturing an interferometric fiber optic refractometer (100), according to claim 1 or 2, wherein the moving step is performed by a motorized translation stage.

4. The method (300) for manufacturing an interferometric fiber optic refractometer (100), according to any one of claims 1-3, wherein the substance (108) is a curable polymer and solidifying the substance comprises curing the curable polymer.

5. The method (300) for manufacturing an interferometric fiber optic refractometer (100), according to claim 4, wherein the curable polymer is a temperature curable polymer.

6. The method (300) for manufacturing an interferometric fiber optic refractometer (100), according to claim 4, wherein the curable polymer is a UV-curable polymer and curing the curable polymer comprises curing the UV-curable polymer with a UV light source.

7. The method (300) for manufacturing an interferometric fiber optic refractometer (100), according to any of the previous claims, wherein the distance "d" is within a range between 40 and 180 $\mu$m, more preferably within a range between 40 and 80 $\mu$m or within a range between 125 and 150 $\mu$m.

8. The method (300) for manufacturing an interferometric fiber optic refractometer (100), according to any of the previous claims, wherein a diameter of the longitudinal through hole (102) of the ferrule (101) and a diameter of the single mode fiber (103) is substantially the same.

**Patentansprüche**

1. Verfahren (300) zur Herstellung eines interferometrischen faseroptischen Refraktometers (100), **dadurch gekennzeichnet, dass** es die folgenden Schritte umfasst:

Einführen (301) einer Einmodenfaser (103) mit einer flachen Endfacette (104) in eine Längsöffnung (102) einer Ferrule (101), bis die flache Endfacette (104) ein Ende (107) der Ferrule (101) erreicht, wobei die flache Endfacette (104) im Wesentlichen senkrecht zu einer Längsachse (105) der Einmodenfaser (103) steht;
Aufbringen (302) einer Substanz (108) auf das Ende (107) der Ferrule (101), wobei die Substanz (108) einen Brechungsindex aufweist, der sich von einem Brechungsindex eines Kerns (110) der Einmodenfaser (103) unterscheidet;
Bewegen (303) der Einmodenfaser (103) in die Ferrule (101) um einen Abstand "d", so dass die Substanz (108) einen Hohlraum (106) ausfüllt, der innerhalb der Ferrule (101) durch Oberflächenspannung entstanden ist, wobei der Hohlraum (106) durch den Abstand "d" definiert ist;
zumindest teilweises Verfestigen (304) der Substanz (108); und
Polieren (305) der zumindest teilweise verfestigten Substanz (108), um eine flache Endspitze (109) der Ferrule (101) zu bilden, welche im Wesentlichen parallel zur flachen Endfacette (104) der Einmodenfaser (103) ist.

2. Verfahren (300) zur Herstellung eines interferometrischen faseroptischen Refraktometers (100) gemäß Anspruch 1, umfassend das Halten der Einmodenfaser (103) und der Ferrule (101) in einer vertikalen Position während der Schritte des Aufbringens und Bewegens.

3. Verfahren (300) zur Herstellung eines interferometrischen faseroptischen Refraktometers (100) gemäß Anspruch 1 oder 2, wobei der Schritt des Bewegens durch einen motorisierten Translationstisch durchgeführt wird.

4. Verfahren (300) zur Herstellung eines interferometrischen faseroptischen Refraktometers (100) gemäß einem der Ansprüche 1 - 3, wobei die Substanz (108) ein härtbares Polymer ist und das Verfestigen der Substanz das Aushärten des härtbaren Polymers umfasst.

5. Verfahren (300) zur Herstellung eines interferometrischen faseroptischen Refraktometers (100) gemäß Anspruch 4, wobei das härtbare Polymer ein temperaturhärtbares Polymer ist.

6. Verfahren (300) zur Herstellung eines interferometrischen faseroptischen Refraktometers (100) gemäß Anspruch 4, wobei das härtbare Polymer ein UV-härtbares Polymer ist und das Aushärten des härtbaren Polymers das Aushärten des UV-härtbaren Polymers mit einer UV-Lichtquelle umfasst.

**7.** Verfahren (300) zur Herstellung eines interferometrischen faseroptischen Refraktometers (100) gemäß einem der vorhergehenden Ansprüche, wobei der Abstand "d" in einem Bereich zwischen 40 und 180 μm, vorzugsweise in einem Bereich zwischen 40 und 80 μm oder in einem Bereich zwischen 125 und 150 μm liegt.

**8.** Verfahren (300) zur Herstellung eines interferometrischen faseroptischen Refraktometers (100) gemäß einem der vorhergehenden Ansprüche, wobei ein Durchmesser der Längsöffnung (102) der Ferrule (101) und ein Durchmesser der Einmodenfaser (103) im Wesentlichen gleich sind.

**Revendications**

**1.** Méthode (300) de fabrication d'un réfractomètre à fibre optique interférométrique (100), **caractérisée en ce qu'**elle comprend les étapes suivantes :

introduire (301) une fibre monomode (103) avec une facette d'extrémité plate (104) dans un trou traversant longitudinal (102) d'une virole (101) jusqu'à ce que la facette d'extrémité plate (104) atteigne une extrémité (107) de la virole (101), la facette d'extrémité plate (104) étant sensiblement perpendiculaire à un axe longitudinal (105) de la fibre monomode (103) ;
déposer (302) une substance (108) sur l'extrémité (107) de la virole (101), la substance (108) ayant un indice de réfraction qui est différent d'un indice de réfraction d'un cœur (110) de la fibre monomode (103) ;
déplacer (303) la fibre monomode (103) dans la virole (101) d'une distance "d", de sorte que la substance (108) remplisse une cavité (106) créée à l'intérieur de la virole (101) par une tension superficielle, la cavité (106) étant définie par la distance "d" ;
solidifier au moins partiellement (304) la substance (108) ; et
polir (305) la substance au moins partiellement solidifiée (108) pour former une pointe d'extrémité plate (109) de la virole (101) qui est sensiblement parallèle à la facette d'extrémité plate (104) de la fibre monomode (103).

**2.** Méthode (300) de fabrication d'un réfractomètre à fibre optique interférométrique (100) selon la revendication 1, comprenant le maintien de la fibre monomode (103) et de la virole (101) dans une position verticale pendant les étapes de dépôt et de déplacement.

**3.** Méthode (300) de fabrication d'un réfractomètre à fibre optique interférométrique (100) selon la revendication 1 ou 2, dans laquelle l'étape de déplacement est réalisée par un étage de translation motorisé.

**4.** Méthode (300) de fabrication d'un réfractomètre à fibre optique interférométrique (100) selon l'une des revendications 1 à 3, dans laquelle la substance (108) est un polymère durcissable et la solidification de la substance comprend le durcissement du polymère durcissable.

**5.** Méthode (300) de fabrication d'un réfractomètre à fibre optique interférométrique (100) selon la revendication 4, dans laquelle le polymère durcissable est un polymère durcissable à la température.

**6.** Méthode (300) de fabrication d'un réfractomètre à fibre optique interférométrique (100) selon la revendication 4, dans laquelle le polymère durcissable est un polymère durcissable aux UV et le durcissement du polymère durcissable comprend le durcissement du polymère durcissable aux UV à l'aide d'une source de lumière UV.

**7.** Méthode (300) de fabrication d'un réfractomètre à fibre optique interférométrique (100) selon l'une des revendications précédentes, dans laquelle la distance "d" se trouve dans une plage entre 40 et 180 μm, de manière davantage préférée dans une plage entre 40 et 80 μm ou dans une plage entre 125 et 150 μm.

**8.** Méthode (300) de fabrication d'un réfractomètre à fibre optique interférométrique (100) selon l'une des revendications précédentes, dans laquelle un diamètre du trou traversant longitudinal (102) de la virole (101) et un diamètre de la fibre monomode (103) sont sensiblement identiques.

**FIG. 1**

**FIG. 2**

```
                                                                    300

┌─────────────────────────────────────────────────────────────┐
│ INTRODUCING A SMF WITH A FLAT END FACET INTO A LONGITUDINAL    │
│ THROUGH HOLE OF A FERRULE UNTIL THE FLAT END FACET REACHES    │──301
│ A TIP OF THE FERRULE                                          │
└─────────────────────────────────────────────────────────────┘
                              │
                              ▼
┌─────────────────────────────────────────────────────────────┐
│ DEPOSITING A SUBSTANCE ONTO THE TIP OF THE FERRULE, THE       │
│ SUBSTANCE HAVING A REFRACTIVE INDEX THAT IS DFFERENT FROM A   │──302
│ REFRACTIVE INDEX OF THE CORE OF THE SMF                       │
└─────────────────────────────────────────────────────────────┘
                              │
                              ▼
┌─────────────────────────────────────────────────────────────┐
│ MOVING THE SMF INTO THE FERRULE A DISTANCE "d", SUCH THAT THE │
│ SUBSTANCE FILLS A CAVITY CREATED INSIDE THE FERRULE, THE      │──303
│ CAVITY BEING DEFINED BY THE DISTANCE "d"                      │
└─────────────────────────────────────────────────────────────┘
                              │
                              ▼
┌─────────────────────────────────────────────────────────────┐
│ AT LEAST PARTIALLY SOLIDIFYING THE SUBSTANCE                  │──304
└─────────────────────────────────────────────────────────────┘
                              │
                              ▼
┌─────────────────────────────────────────────────────────────┐
│ POLISHING THE SUBSTANCE TO FORM A FLAT END TIP OF THE FERRULE │
│ THAT IS SUBSTANTIALLY PARALLEL TO THE FLAT END FACET OF THE   │──305
│ SMF                                                           │
└─────────────────────────────────────────────────────────────┘
```

FIG. 3

EP 3 954 983 B1

PROVIDING AN INTERFEROMETRIC FIBER OPTIC REFRACTOMETER — 401

INJECTING A PROBE OPTICAL SIGNAL THROUGH THE SMF — 402

CAPTURING AN INTERFERENCE PATTERN THAT IS GENERATED BY THE SUPERPOSITION OF A FIRST REFLECTED OPTICAL SIGNAL CORRESPONDNG TO THE REFLECTION OF THE PROBE OPTICAL SIGNAL INTO THE SMF-SUBSTANCE INTERFACE, AND A SECOND REFLECTED OPTICAL SIGNAL CORRESPONDING TO THE REFLECTION OF THE PROBE OPTICAL SIGNAL INTO THE SUBSTANCE-SAMPLE INTERFACE — 403

NORMALIZING THE INTERFERENCE PATTERN — 404

CALCULATING THE FAST FOURIER TRANSFORM OF THE INTERFERENCE PATTERN — 405

DETERMINING THE REFRACTIVE INDEX OF THE SAMPLE FROM AN AMPLITUDE AND A PHASE OF THE FAST FOURIER TRANSFORM OF THE NORMALIZED INTERFERENCE PATTERN — 406

FIG. 4

EP 3 954 983 B1

FIG. 5

**FIG. 6A**

EP 3 954 983 B1

FIG. 6B

**FIG. 7A**

**FIG. 7B**

**FIG. 8**

FIG. 9A

FIG. 9B

**FIG. 10A**

**FIG. 10B**

EP 3 954 983 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2003112443 A1